(19) Europäisches Patentamt

European Patent Office

Office européen des brevets

(11) **EP 0 654 884 B1**

## (12) EUROPÄISCHE PATENTSCHRIFT

(45) Veröffentlichungstag und Bekanntmachung des Hinweises auf die Patenterteilung:
**08.01.1997** **Patentblatt 1997/02**

(51) Int Cl.6: **H02J 7/10**

(21) Anmeldenummer: **94117395.7**

(22) Anmeldetag: **04.11.1994**

(54) **Ladeverfahren für Akkumulatoren**

Method for charging batteries

Procédé de charge de batteries

(84) Benannte Vertragsstaaten:
**DE FR GB IT**

(30) Priorität: **18.11.1993 DE 4339363**

(43) Veröffentlichungstag der Anmeldung:
**24.05.1995 Patentblatt 1995/21**

(73) Patentinhaber: **TEMIC TELEFUNKEN microelectronic GmbH**
**74072 Heilbronn (DE)**

(72) Erfinder:
• **Hanselmann, Dieter**
**D-74613 Öhringen (DE)**
• **Mayer, Bernd**
**D-69190 Walldorf (DE)**
• **Nutz, Karl-Diether**
**D-74229 Oedheim (DE)**
• **Weller, Stefan-Peter**
**D-74177 Bad Friedrichshall (DE)**

(74) Vertreter: **Maute, Hans-Jürgen, Dipl.-Ing. et al**
**TEMIC TELEFUNKEN microelectronic GmbH**
**Postfach 35 35**
**74025 Heilbronn (DE)**

(56) Entgegenhaltungen:
EP-A- 0 484 803      FR-A- 2 591 822
US-A- 3 794 905      US-A- 3 912 108
US-A- 4 503 378

## Beschreibung

Die Erfindung betrifft ein Ladeverfahren für Akkumulatoren, insbesondere für NiCd (Nickel-Cadmium)- und NiMH (Nickel-Hydrid)-Zellen, bei dem die Akkumulatoren von einer Ladestromquelle versorgt werden.

Es sind bisher eine Vielzahl solcher Ladeverfahren bekanntgeworden (vgl. "Intelligentes Laden von NiCd-Akkus" aus Design und Elektronik 22, 1992, Seiten 106 und 107), denen alle das Ziel zugrundeliegt, ein kostengünstiges und optimales Ladekonzept zur Verfügung zu stellen. So sollte sichergestellt werden, daß der Akkumulator möglichst auf seine Nennkapazität aufgeladen wird, aber gleichzeitig eine Überladung vermieden werden sollte, da dies eine verminderte Lebensdauer nach sich ziehen könnte. Auch stellt die Ladezeit ebenfalls ein Bewertungskriterium dar, wobei lange Ladezeiten nicht mehr akzeptiert werden. Eine Schnelladung mit hohem Strom reduziert einerseits die Ladezeit wesentlich, andererseits muß dann aber die Ladedauer genau eingehalten werden, da ansonsten der Akkumulator zerstört werden kann. Somit ist ein Ladegerät mit einem Steuerteil erforderlich, das den Ladestrom und den Ladezustand des Akkumulators ständig überwacht. So wird bei verschiedenen bekannten Verfahren (siehe z. B. FR-A-2 591 822 und US-A-4 503 378) das dU/dt-Verhalten der Ladekurve überwacht und hieraus ein Abschaltkriterium abgeleitet. So kann beispielsweise bei Absinken der Akku-Spannung, also bei negativem dU/dt-Wert oder aber bei verstärktem Ansteigen der Akku-Spannung, also bei positivem dU/dt-Wert der Ladevorgang beendet werden (siehe z.B. EP-A-0 484 803). Eine solche Gradienten-Überwachung des Spannungsverlaufs der Ladekurve ist bisher nur mit großem schaltungstechnischem Aufwand durchgeführt worden, die sich in teuren Ladegeräten wiederspiegeln.

Der Erfindung liegt daher die Aufgabe zugrunde, ein Ladeverfahren der eingangs genannten Art zur Detektion des dU/dt-Verhaltens der Ladekurve des zu ladenden Akkumulators anzugeben, das mit geringen schaltungstechnischen Mitteln realisierbar ist.

Diese Aufgabe wird mit den kennzeichnenden Merkmalen des Patentanspruches 1 gelöst. Hiernach wird jeweils während aufeinanderfolgenden Ladezyklen von bestimmter Zeitdauer der Spannungszuwachs der Ladespannung an dem zu ladenden Akkumulator in einer einem bestimmten Spannungswert entsprechenden Meßeinheit festgestellt. Die Anzahl dieser Meßeinheiten werden über die Zeitdauer eines Ladezyklus als Zählimpuls zweier Vorwärts/Rückwärts-Zählern zugeführt, wobei ein Zähler im Rückwärtsmodus arbeitet und zu Beginn eines Ladezyklus einen Zählwert aufweist, der der Summe aus dem Wert eines definierten Anfangszählerstands und der Anzahl der im vorangehenden Ladezyklus festgestellten Meßeinheiten entspricht. In dem darauffolgenden Ladezyklus werden die Rollen der beiden Zähler getauscht, so daß nun der vorwärtszählende Zähler in den Rückwärtsmodus gesetzt wird und der andere in den Vorwärtsmodus, wobei dieser letztgenannte Zähler auf den schon oben erwähnten bestimmten Anfangszählerstand gesetzt wird. Nach jedem Ladezyklus wird der Endzählerzustand des rückwärtszählenden Zählers mit dem definierten Anfangsstand durch Erzeugen des Differenzbetrages verglichen und hieraus ein Abschaltkriterium für den Ladevorgang abgeleitet.

Da der rückwärtszählende Zähler immer von einem Anfangszählerstand beginnt, der ein Maß für den Zuwachs der Ladespannung im vorhergehenden Ladezyklus enthält, also den Wert dU/dt darstellt, wobei dt die Länge des Ladezyklus darstellt, gibt der Differenzbetrag zwischen den genannten Zählerständen den Wert der Änderung des dU/dt-Wertes über zwei aufeinanderfolgende Ladezyklen an. Mathematisch ausgedrückt, stellt somit dieser Differenzbetrag ein Maß der zweiten Ableitung der Ladekurve über die beiden aufeinanderfolgenden Ladezyklen dar. Somit kann ein Grenzwert festgelegt werden, der bestimmt, ob die Ladung fortgesetzt wird oder der Ladevorgang als beendet zu betrachten ist. Dieser Grenzwert, der eine positive, natürliche Zahl darstellt, legt somit fest, bei welcher Änderung des dU/dt-Wertes über zwei aufeinanderfolgende Ladezyklen der Ladevorgang beendet wird.

Dieses erfindungsgemäße Verfahren eignet sich besonders für solche Akkumulatoren, deren Lade-Kennlinie zwei Wendepunkte und ein Maximum aufweist, also beispielsweise NiCd- oder NiMH-Akkumulatoren. Beim Schnelladen solcher Akkumulatoren steigt die Ladespannung stetig an, bis sie im Maximum der Lade-Kennlinie, wo ca. 110 % der Nennkapazität erreicht sind, vollgeladen sind. Wird über dieses Maximum hinaus weitergeladen, wird die zugeführte elektrische Energie nur noch in Wärme umgesetzt. Das Spannungsmaximum ist bei einem NiCd-Akku wesentlich stärker ausgeprägt als bei einem NiMH-Akku, insbesondere tritt die negative Steigung der Spannungskennlinie am Ladeschluß nicht immer zuverlässig auf. Daher kann mit dem erfindungsgemäßen Verfahren der Übergang von einer flachen Steigung zu einer starken Steigung im Bereich des zweiten Wendepunktes der Lade-Kennlinie durch entsprechende Wahl des Grenzwertes sicher erfaßt werden.

Bei einer vorteilhaften Weiterbildung des erfindungsgemäßen Verfahrens werden zur Messung der Spannungszuwächse über jeweils einen Ladezyklus äquidistante Zeitpunkte bestimmt. Zu jedem dieser Zeitpunkte wird ein Vergleich zwischen der Ladespannung und einem Referenzwert durchgeführt, wobei nach einem festgestellten Spannungszuwachs die Referenzspannung um den als Meßeinheit vorgesehenen Spannungswert erhöht wird. Dieser neue Referenzwert dient im darauffolgenden Zeitpunkt als Referenzwert. Dabei wird jede Erhöhung um eine Meßeinheit als Zählimpuls den beiden Zählern zugeführt. Vorzugsweise wird bei dieser Weiterbildung des erfindungsgemäßen Verfahrens mit einem Wert der Referenzspannung begonnen, der bei Beginn des Ladezyklus der augenblicklichen Ladespannung entspricht.

Da es bei einer Ladung von Akkumulatoren, deren Lade-Kennlinie den o. g. Verlauf aufweisen, im wesentlichen darauf ankommt, den Anstieg der Ladekurve zum Maximum, also den Bereich um den zweiten Wendepunkt der Kurve, zu erfassen, kann bei einer anderen Ausführungsform des erfindungsgemäßen Verfahrens der Ladevorgang mit einer Vorladung gestartet werden, indem nach Beginn der Ladung in äquidistanten Zeitpunkten ein Vergleich der Ladespannung mit einer Referenzspannung durchgeführt wird. Falls zu einem Zeitpunkt die augenblickliche Ladespannung mit der Referenzspannung übereinstimmt, werden die beiden Vorwärts/Rückwärtszähler aktiviert, d.h. nun erst beginnt die eigentliche Auswertung der Änderung des dU/dt-Wertes über zwei aufeinanderfolgende Ladezyklen, indem den beiden Zählern, die in der oben beschriebenen Weise im entgegengesetzten Modus arbeiten, Zählimpulse entsprechend der den Wert der Zunahme der Ladespannung angebenden Meßeinheiten zugeführt werden, um am Ende eines Ladezyklus die Zählerstände auszuwerten. Die Ladung wird dabei mit der gleichen Ladestromstärke fortgeführt. Falls dagegen in diesem Zeitpunkt die augenblickliche Ladespannung größer als die Referenzspannung ist, wird die Referenzspannung um einen bestimmten Spannungswert erhöht und bildet für die Vergleichsmessung im darauffolgenden Zeitpunkt den Referenzwert. Vorzugsweise kann der für die Erhöhung der Referenzspannung vorgesehene Spannungswert den gleichen Wert aufweisen, wie derjenige für die Meßeinheit vorgesehene Spannungswert. Somit wird schnellstens jener Bereich der Ladekurve erreicht, die in bezug auf die Beendigung des Ladevorgangs von Bedeutung ist.

Um zu vermeiden, daß ein verfälschter Wert der Ladespannungen für die Vergleichsmessungen gemessen wird, wird in den Meßzeitpunkten der Ladevorgang unterbrochen. Damit entspricht die gemessene Ladespannung nur dem elektrochemischen Zellenpotential und enthält nicht Widerstandskomponenten, die auf dem Leitungswiderstand, dem Elektrodenwiderstand oder dem Elektrolytwiderstand beruhen.

Um sicherzustellen, daß der Akkumulator auch wirklich vollgeladen ist, wird der Ladevorgang mit einer sog. Top-off-Ladung abgeschlossen, die mit einem reduzierten Ladestrom erfolgt. Diese Nachladung wird für eine bestimmte vorgegebene Zeitdauer durchgeführt und erst danach der gesamte Ladevorgang beendet.

Im folgenden wird das erfindungsgemäße Verfahren anhand eines Ausführungsbeispieles im Zusammenhang mit den Zeichnungen dargestellt und erläutert. Es zeigen:

Figur 1    ein Blockschaltbild zur Darstellung des erfindungsgemäßen Verfahrens,

Figur 2    ein Zählerstandsdiagramm zur Erläuterung der Funktion der beiden Zähler gemäß Figur 1 und

Figur 3    den Spannungsverlauf während des Ladens bei NiCd- und NiMH-Akkumulatoren.

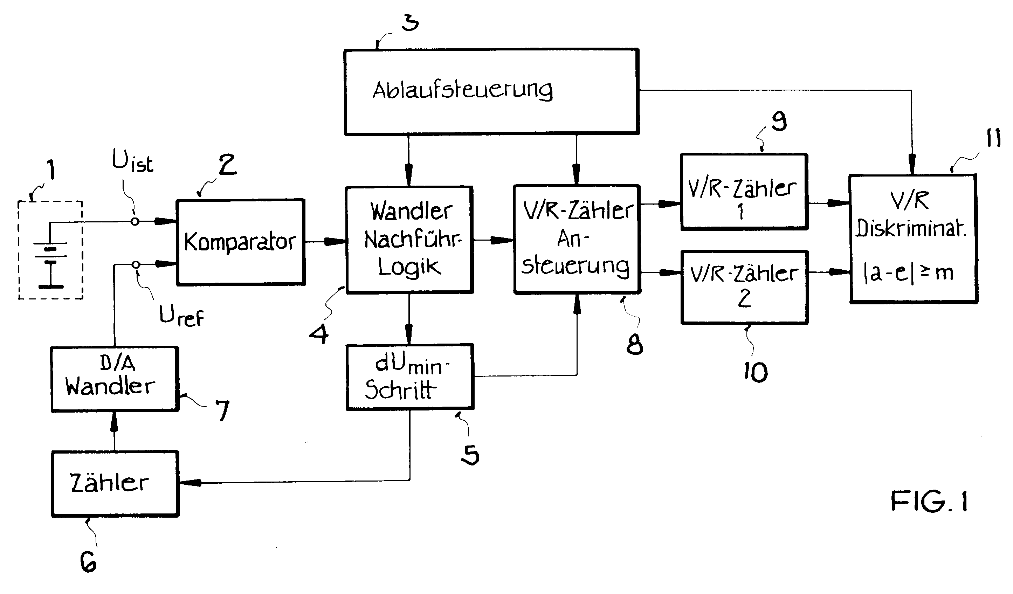

Mit dem Bezugszeichen 3 ist in Figur 1 eine Ablaufsteuerung bezeichnet, die nach Einliegen eines zu ladenden Akkumulators, der mit dem Bezugszeichen 1 angedeutet ist, zunächst Randbedingungen, wie beispielsweise Temperatur, oder das Vorliegen eines Kurzschlusses prüft, und erst nach positivem Ergebnis den Ladestrom für eine bestimmte Ladezeit, beispielsweise 20 s freigibt. Mit dem Ende dieser ersten Ladephase wird der Ladestrom für einige 100 ms ausgeschaltet. Während dieser Ladestrompause wird der Istwert $U_{ist}$ der Akku-Spannung mit Hilfe eines Komparators 2 mit einem Referenzwert $U_{ref}$ verglichen. Diese Referenzspannung $U_{ref}$ wird von einem D/A-Wandler 7 erzeugt, der den von einem Zähler 6 gelieferten Digitalwert in den entsprechenden Analogwert, also den Referenzwert $U_{ref}$ umsetzt.

Ist in der ersten Ladestrompause der Istwert $U_{ist}$ größer als der Referenzwert $U_{ref}$, schließt sich eine weitere Ladephase von gleicher Zeitdauer an, wobei jedoch der Referenzwert $U_{ref}$ um einen bestimmten Betrag nachgeführt wird. Hierzu ist dem Komparator 2 eine Wandlernachführ-Logik 4 nachgeschaltet, die eine Schaltung 5 veranlaßt, den Zähler 6 mit einer bestimmten Schrittzahl anzusteuern, die einem minimalen Spannungsschritt $dU_{min}$ von 5 mV entspricht. Somit wird nach jeder Ladephase, falls der Istwert $U_{ist}$ größer als der Referenzwert $U_{ref}$ ist, der Referenzwert $U_{ref}$ jeweils um einen Spannungsschritt $dU_{min}$ erhöht. Bei Gleichstand des Istwertes $U_{ist}$ und des Referenzwertes $U_{ref}$ geht die Vorladephase in die Hauptladephase über, indem die Ablaufsteuerung 3 zwei V/R-Zähler 9 und 10 freigibt. Dabei wird die Ladung mit der gleichen Ladestromstärke fortgeführt.

Wenn also der Komparator 2 der Wandlernachführ-Logik 4 anzeigt, daß der Istwert $U_{ist}$ mit dem Referenzwert $U_{ref}$ übereinstimmt, gibt diese Wandlernachführ-Logik 4 eine V/R-Zähler-Ansteuerung 8 zur Ansteuerung von zwei Vorwärts/Rückwärts-Zählern 9 und 10 frei. Diese beiden 4-bit-Zähler 9 und 10 dienen zur Erkennung der Zunahme der Steigung der Ladespannung und liefern ihren Zählerstand jeweils an einen V/R-Diskriminator 11, der eine Auswertung der Zählerstände vornimmt.

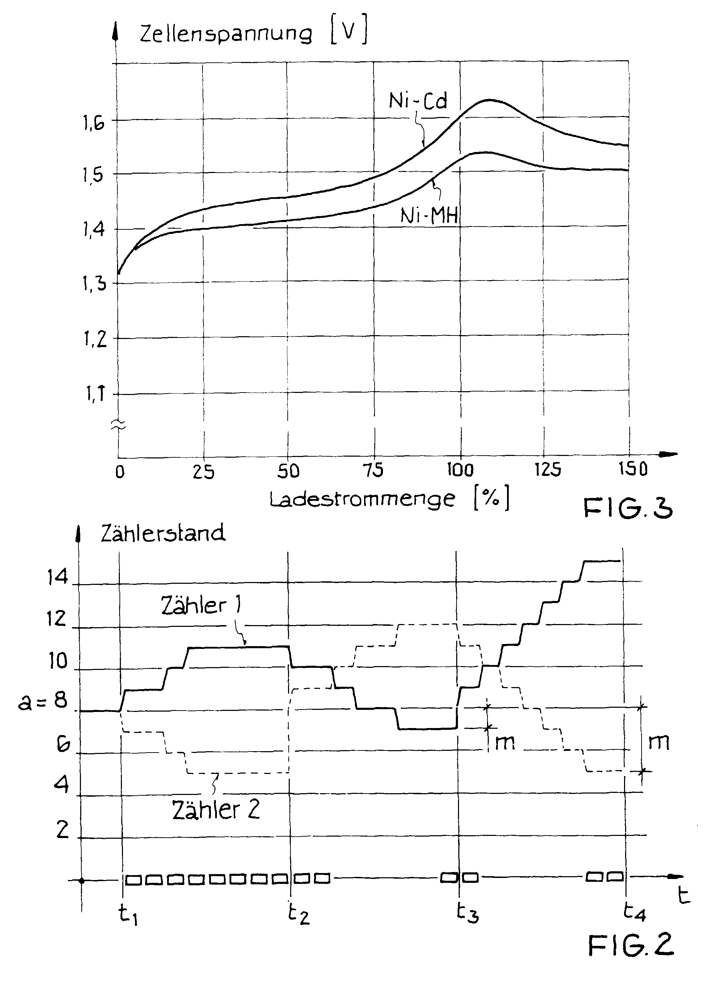

Die nun folgende Hauptladephase wird zyklisch und zwar jeweils nach 160 s unterbrochen, wobei in diesen Ladepausen die Auswertung des Zählerstandes von jeweils einem der beiden Zähler 9 oder 10 vorgenommen wird. Diese Zeitpunkte sind in der Figur 2 mit $t_1$ bis $t_4$ bezeichnet. Jeder dieser 160 s dauernde Ladezyklus wird seinerseits wieder zyklisch unterbrochen, so daß 8 Ladephasen mit einer Dauer von ca. 20 s entstehen. In jeder dieser hierdurch entstehenden 7 Ladepausen werden wiederum der Istwert $U_{ist}$ und der Referenzwert $U_{ref}$ durch den Komparator 2 verglichen.

Zu Beginn der Hauptladephase, also zu Beginn des Zeitpunktes $t_1$ gemäß Figur 2 werden sowohl der erste Zähler 9 als auch der zweite Zähler 10 auf einen definierten Anfangszustand, hier auf den Zählwert 8, gesetzt. Dabei befindet sich zunächst der erste Zähler 9 im Vorwärtsmodus und der zweite Zähler 10 im Rückwärtsmodus. Falls in einer Ladepause der Istwert $U_{ist}$ größer als der Sollwert $U_{ref}$ ist, erfolgt eine Nachführung des D/A-Wandlers 7. Gleichzeitig erhält auch die V/R-Zähleransteuerung 8 von der Schaltung 5 einen Nachführimpuls, der von der Schaltung 8 den beiden Zählern 9 und 10 als Zählimpuls zugeführt wird, wodurch der erste Zähler einen Schritt vorwärts und der zweite Zähler einen Schritt rückwärts zählt. Dieser Vorgang wiederholt sich nochmals siebenmal, bis der erste Zähler beispielsweise einen Zählerstand 11 und der zweite Zähler einen Zählerstand 5 aufweist. Zum Zeitpunkt $t_2$ wird der erste Zähler 9 in den Rückwärtsmodus und der Zähler 2 in den Vorwärtsmodus und gleichzeitig auf den Anfangszählerstand, d. h. auf den Zählwert 8, gesetzt. Nun wird wieder nach allen 20 s der Ladestrom unterbrochen und ein Istwertvergleich mit dem Referenzwert durchgeführt und ggf. der Referenzwert $U_{ref}$ nachgeführt. Dabei führt wieder jeder Nachführschritt beim Zähler 1 zu einer schrittweisen Verminderung und beim Zähler 2 zu einer schrittweisen Zunahme des Zählerstandes. Am Ende des zweiten Ladezyklus, also zum Zeitpunkt $t_3$, zeigt der Zähler 1 beispielsweise den Zählerstand 7 und der Zähler 2 den Zählerstand 12.

Nun erfolgt zum ersten Mal eine Auswertung durch den V/R-Diskriminator 11, indem zunächst die Differenz zwischen dem Endzählerstand e des Zählers 1 und dem Anfangszählerstand a gebildet wird. Im vorliegenden Fall beträgt diese Differenz

$$m = |a - e| = 1.$$

Diese Differenz m zeigt die relative Änderung der Steigung der Ladekurve gegenüber dem vorhergehenden 160 s-Ladezyklus an. Im vorliegenden Fall bedeutet dies, daß die Steigung im zweiten Ladezyklus gegenüber dem ersten Ladezyklus um den relativen Wert 1 zugenommen hat.

Somit kann ein bestimmter Wert für die Differenz m festgelegt werden, bei dem der Schnelladevorgang beendet sein soll. Als ein für die Praxis sinnvoller Wert hat sich die Differenz m = 3 herausgestellt. Das Abschaltkriterium lautet daher

$$|a - e| \geq m.$$

Bei dem dritten Ladezyklus zwischen den Zeitpunkten $t_3$ und $t_4$ gemäß Figur 2 wird zum Zeitpunkt $t_4$ dieses Abschaltkriterium erreicht. Zum Zeitpunkt $t_3$ wird zunächst der erste Zähler wieder in den Vorwärtsmodus geschaltet und gleichzeitig auf den Anfangswert a = 8 gesetzt, während der zweite Zähler in den Rückwärtsmodus geschaltet wird. Wie in Figur 2 dargestellt ist, waren während dieses dritten Ladezyklus 7 Nachführschritte erforderlich, so daß der Zählerendstand des ersten Zählers 15 und der Zählerendstand e des zweiten Zählers 5 zeigt. Somit beträgt die Differenz m = 3 und erfüllt die o. g. Bedingung, mit der Folge der Beendigung des Schnelladevorganges. Liegt dagegen die Abschaltbedingung nicht vor, wird ein 160 s-Ladezyklus so lange wiederholt, bis ein Abschaltkriterium vorliegt.

Nimmt die Steigung der Ladekurve ständig zu, ist auch die Differenz a - e positiv. Erfolgt statt einer Steigungszunahme eine Steigungsabnahme der Ladespannung, so ist der Zählerendstand e größer als der Anfangszählerstand a, also wird die Differenz a - e negativ. Mit der o. g. Abschaltbedingung wird somit auch hier der Schnelladevorgang beendet. Dieses Abschaltkriterium wird erreicht, wenn die Ladespannung ihr Maximum überschritten hat.

Figur 3 zeigt den Spannungsverlauf während des Ladens bei einem NiCd- und NiMH-Akkumulator. Bei dem erfindungsgemäßen Ladeverfahren wird der das Abschaltkriterium bestimmende Faktor m so eingestellt, daß der Schnelladevorgang vor Erreichen des Maximums der Kurve abgeschaltet wird. Dies ist dann der Fall, wenn von Ladezyklus zu Ladezyklus eine große Steigungszunahme vorliegt oder mathematisch gesprochen, wenn die zweite Ableitung der Ladekurve einen großen Wert aufweist. Das zweite Abschaltkriterium, bei dem das Maximum schon durchlaufen wurde, also die Differenz a - e negativ ist, kommt normalerweise nicht zum Tragen, da das erste Kriterium, wenn also die Differenz a - e positiv ist und den Wert m überschreitet, vorher auftritt. Daher wird dieses zweite Abschaltkriterium lediglich aus Sicherheitsgründen mitausgewertet.

Somit können auch die beiden Abschaltkriterien im Gegensatz zu dem obigen mit verschiedenen Faktoren ausgewertet werden:

$$a - e \geq m'$$

und

$$e - a \geq n,$$

wobei m' und n positive, ganze Zahlen sind.

Zur Ausblendung von Akku-Spannungssprüngen kann dem Komparator 2 ein Schieberegister, ein sog. 3-bit-Plausibilitäts-Schieberegister, nachgeschaltet werden. Nur wenn dreimal hintereinander vom Komparator die gleiche Wandler-Nachführmeldung ausgegeben wird, erhalten sowohl die Wandler-Nachführ-Logik 4 als auch die beiden Zähler 9 und 10 einen Takt. Weist dabei das Schieberegister zuvor den Stand "000" auf, können von möglichen Nachführtakten innerhalb eines 160 s-Ladezyklus nur 5 eine Änderung an den beiden Zählern 9 und 10 und an dem D/A-Wandler 7 bewirken. In dem Zählerdiagramm nach Figur 2 wurde ein solches 3-bit-Plausibilitäts-Schieberegister nicht berücksichtigt, da hiermit lediglich das erfindungsgemäße Ladeverfahren erläutert werden soll.

Nach Beendigung des Schnelladevorganges wird die restliche fehlende Lademenge für den Akkumulator schonend bei reduziertem Ladestrom (Top-off-Ladung) nachgeladen, wobei die Ladedauer dieser Nachladung auf ca. 20 min begrenzt werden kann. Nach Ablauf der Nachladung erfolgt eine sogenannte Erhaltungsladung, wobei die Ladestromstärke nochmals reduziert wird. Die Erhaltungsladung wird bis zur Entnahme des Akkus aus dem Ladegerät fortgesetzt.

**Patentansprüche**

1. Ladeverfahren für Akkumulatoren, insbesondere für NiCd (Nickel-Cadmium)- und NiH (Nickel-Hydrid)-Zellen, bei dem die Akkumulatoren von einer Ladestromquelle versorgt werden, gekennzeichnet durch folgende Merkmale:

   a) zur Erzeugung von Ladezyklen von bestimmter Zeitdauer wird die Ladestromquelle zyklisch von dem Akkumulator getrennt,

   b) von aufeinanderfolgenden Ladezyklen wird jeweils der Spannungszuwachs der Ladespannung in einer einem bestimmten Spannungswert entsprechenden Meßeinheit gemessen,

   c) zu Beginn eines Ladezyklus wird

      c1) ein erster Vorwärts/Rückwärts-Zähler (9) auf einen definierten Anfangszählerstand von a > 0 gesetzt und in den Vorwärtsmodus geschaltet, während

      c2) ein zweiter Vorwärts/Rückwärts-Zähler (10) in den Rückwärtsmodus geschaltet wird und dabei zu Beginn des Ladezyklus einen Zählerstand (e) aufweist, der der Summe aus dem Wert des definierten Anfangszählerstandes a und dem Wert der Einheiten des Spannungszuwachses des vorangehenden Ladezyklus entspricht,

   d) die Anzahl der über einen Ladezyklus festgestellten Einheiten des Spannungszuwachses wird als Zählwert dem ersten und zweiten Zähler (9, 10) zugeführt,

   e) am Ende eines Ladezyklus wird der Betrag er Differenz aus dem Zählerstand (e) des im Rückwärtsmodus arbeitenden Zählers und dem definierten Anfangszählerstand a festgestellt und

   e1) der Ladevorgang beendet, falls der Differenzbetrag größer als ein bestimmter positiver Wert (m) ist, andernfalls

   e2) wird der Ladevorgang mit einem Ladezyklus fortgeführt, indem die Verfahrensschritte c) bis e) derart wiederholt werden, daß nunmehr der im Rückwärtsmodus arbeitende Zähler auf den definierten Anfangszählerstand a und in den Vorwärtsmodus geschaltet und der im Vorwärtsmodus arbeitende Zähler in den Rückwärtsmodus geschaltet wird.

2. Verfahren nach Anspruch 1, dadurch gekennzeichnet, daß zur Messung des Spannungszuwachses über einen Ladezyklus folgende Verfahrensschritte durchgeführt werden:

   a) es werden über die Zeitdauer eines Ladezyklus äquidistante Zeitpunkte bestimmt,

   b) zu jedem dieser Zeitpunkte wird ein Vergleich zwischen der Ladespannung ($U_{ist}$) und einem Referenzwert ($U_{ref}$) durchgeführt, wobei nach einem festgestellten Spannungszuwachs der Referenzwert ($U_{ref}$) um den als Meßeinheit vorgesehenen Spannungswert erhöht wird und

   c) jede Erhöhung um eine Meßeinheit wird als Zählimpuls den beiden Zählern (9, 10) zugeführt.

3. Verfahren nach Anspruch 2, dadurch gekennzeichnet, daß mit Beginn eines Ladezyklus der Referenzwert ($U_{ref}$) der augenblicklichen Ladespannung ($U_{ist}$) entspricht.

4. Verfahren nach einem der vorangehenden Ansprüche, dadurch gekennzeichnet, daß eine Vorladung mit folgenden Verfahrensschritten durchgeführt wird:

   a) es werden äquidistante Zeitpunkte zur Messung der Ladespannung ($U_{ist}$) festgelegt,

   b) in diesen Zeitpunkten wird ein Vergleich der Ladespannung ($U_{ist}$) mit einer Referenzspannung ($U_{ref}$) durchgeführt,

   c) falls in einem der Zeitpunkte die Ladespannung ($U_{ist}$) mit dem Referenzwert ($U_{ref}$) übereinstimmt, werden die Vorwärts/Rückwärts-Zähler (9, 10) zur Durchführung der Hauptladung aktiviert und

d) falls in diesen Zeitpunkten die Ladespannung ($U_{ist}$) größer als der Referenzwert ($U_{ref}$) ist, wird der Referenzwert um einen bestimmten Spannungswert erhöht und bildet für die Vergleichsmessung im darauffolgenden Zeitpunkt den Referenzwert ($U_{ref}$).

5. Verfahren nach Anspruch 4, dadurch gekennzeichnet, daß die Vorladung und Hauptladung mit gleicher Ladestromstärke durchgeführt werden.

6. Verfahren nach einem der Ansprüche 2 bis 5, dadurch gekennzeichnet, daß in den Zeitpunkten zur Messung der Spannungszuwächse der Ladezyklus jeweils für eine kurze Zeitdauer unterbrochen wird.

7. Verfahren nach einem der vorangehenden Ansprüche, dadurch gekennzeichnet, daß sich an den letzten Ladezyklus eine Nachladung mit einem gegenüber dem für den letzten Ladezyklus gelieferten Ladestrom reduzierten Nachladestrom anschließt.

8. Verfahren nach Anspruch 7, dadurch gekennzeichnet, daß die Nachladung, die sogenannte Top-off-Ladung, nach einer bestimmten Zeitdauer beendet wird.

**Claims**

1. A charging process for accumulators, in particular for NiCd (nickel-cadmium) and NiH (nickel-hydride) cells, in which the accumulators are supplied from a charging current source, characterised by the following features:

   a) in order to produce charging cycles of a specific duration, the charging current source is cyclically cut off from the accumulator,
   b) in consecutive charging cycles a measurement is in each case carried out of the voltage increase in the charging voltage in a measurement unit corresponding to a specified voltage value,
   c) at the start of a charging cycle

   c1) a first forwards/backwards counter (9) is set at a defined starting count of a > 0 and is switched into the forwards mode while
   c2) a second forwards/backwards counter (10) is switched into the backwards mode wherein, at the start of the charging cycle, it possesses a count (e) which corresponds to the sum of the value of the defined starting count a and the value of the units of the voltage increase of the preceding charging cycle,

   d) the number of units of the voltage increase established over a charging cycle is fed as count value to the first and second counters (9, 10),
   e) at the end of a charging cycle the amount of the difference between the count (e) of the counter operating in the backwards mode and the defined starting count a is determined and

   e1) the charging process is ended if the difference amount is greater than a specified positive value (m), otherwise
   e2) the charging process is continued with a charging cycle in that process steps c) to e) are repeated in such manner that now the counter operating in the backwards mode is set at the defined starting count a and switched into the forwards mode and the counter operating in the forwards mode is switched into the backwards mode.

2. A process as claimed in Claim 1, characterised in that for the measurement of the voltage increase over a charging cycle the following process steps are carried out:

   a) equidistant times are defined over the duration of a charging cycle,
   b) at each of these times a comparison is carried out between the charging voltage ($U_{ist}$) and a reference value ($U_{ref}$), where, when a voltage increase has been determined, the reference value ($U_{ref}$) is increased by the voltage value provided as measurement unit and
   c) every increase by one measurement unit is fed as counting pulse to the two counters (9, 10).

3. A process as claimed in Claim 2, characterised in that at the start of a charging cycle the reference value ($U_{ref}$) corresponds to the instantaneous charging voltage ($U_{ist}$).

4. A process as claimed in one of the preceding claims, characterised in that a preliminary charging comprising the following process steps is carried out:

   a) equidistant times are defined for the measurement of the charging voltage ($U_{ist}$),
   b) at these times a comparison is carried out between the charging voltage ($U_{ist}$) and a reference voltage ($U_{ref}$),
   c) if at one of these times the charging voltage ($U_{ist}$) is identical to the reference value ($U_{ref}$),

the forwards/backwards counters (9, 10) are activated for the execution of the main charging and

d) if at these times the charging voltage ($U_{ist}$) is greater than the reference value ($U_{ref}$), the reference value is increased by a specified voltage value and forms the reference value ($U_{ref}$) for the comparison measurement at the following time.

5. A process as claimed in Claim 4, characterised in that the preliminary charging and main charging are carried out with equal charging current strength.

6. A process as claimed in one of Claims 2 to 5, characterised in that at the times for the measurement of the voltage increases, the charging cycle is in each case interrupted for a short time interval.

7. A process as claimed in one of the preceding claims, characterised in that the last charging cycle is followed by a secondary charging with a secondary charging current reduced in comparison to the charging current supplied for the last charging cycle.

8. A process as claimed in Claim 7, characterised in that the secondary charging, the so-called top-off charging, is ended after a specified time interval.

**Revendications**

1. Procédé de charge d'accumulateurs, en particulier d'éléments NiCd (au nickel-cadmium) et NiMH (au nickel-métal hybride), selon lequel les accumulateurs sont alimentés par une source de courant de charge, caractérisé en ce que:

    a) pour produire des cycles de charge de durée déterminée, on sépare la source de courant de charge cycliquement de l'accumulateur,
    b) pour des cycles de charge successifs, on mesure chaque fois l'accroissement de la tension de charge dans une unité de mesure correspondant à une valeur de tension déterminée,
    c) au début d'un cycle de charge,

        c1) on met un premier compteur/décompteur (9) à une position initiale définie a > 0 et on le commute au mode progressif, tandis que,
        c2) on commute un second compteur/décompteur (10) au mode régressif, ce second compteur/décompteur présentant, au début du cycle de charge, une position (e) qui correspond à la somme de la valeur de la position initiale définie a et de la valeur des unités de l'accroissement de tension du cycle de charge précédent,

    d) on applique le nombre d'unités de l'accroissement de tension constatées pendant un cycle de charge en tant que valeur de comptage au premier et au second compteur (9, 10),
    e) à la fin d'un cycle de charge, on détermine la grandeur de la différence entre la position (e) du compteur fonctionnant dans le mode régressif et la position initiale définie a et

        e1) on met fin à l'opération de charge au cas où la différence est plus grande qu'une valeur positive (m) déterminée, sinon
        e2) on poursuit l'opération de charge par un cycle de charge en répétant les étapes de procédé c) à e), de manière que le compteur fonctionnant dans le mode régressif soit commuté à la position initiale définie a et au mode progressif, et que le compteur fonctionnant dans le mode progressif soit commuté au mode régressif.

2. Procédé selon la revendication 1, caractérisé en ce que, pour mesurer l'accroissement de tension sur un cycle de charge, on exécute les étapes de procédé suivantes:

    a) on détermine des instants équidistants sur la durée d'un cycle de charge,
    b) à chacun de ces instants, on effectue une comparaison entre la tension de charge ($U_{eff}$) et une valeur de référence ($U_{ref}$) et, après qu'un accroissement de tension a été constaté, on augmente la valeur de référence ($U_{ref}$) de la valeur de tension prévue comme unité de mesure, et
    c) on applique chaque augmentation d'une unité de mesure comme impulsion de comptage aux deux compteurs (9, 10).

3. Procédé selon la revendication 2, caractérisé en ce que, au début d'un cycle de charge, la valeur de référence ($U_{ref}$) correspond à la tension de charge ($U_{eff}$) instantanée.

4. Procédé selon une des revendications précédentes, caractérisé en ce qu'on effectue une précharge comprenant les étapes de procédé suivantes:

    a) on fixe des instants équidistants pour mesurer la tension de charge ($U_{eff}$),
    b) on effectue, à ces instants, une comparaison de la tension de charge ($U_{eff}$) avec une tension de référence ($U_{ref}$),
    c) au cas où, à l'un des instants, la tension de charge (U$_{eff}$) concorde avec la valeur de référence (Uref), on active les compteurs/décompteurs (9, 10) en vue de la réalisation de la charge principale, et

d) au cas où la tension de charge (U$_{eff}$) est plus grande que la valeur de référence (U$_{ref}$) à ces instants, on augmente la valeur de référence d'une valeur de tension déterminée et on forme la valeur de référence (Uref) pour la mesure de comparaison à l'instant suivant.

5. Procédé selon la revendication 4, caractérisé en ce qu'on effectue la précharge et la charge principale avec la même intensité de courant de charge.

6. Procédé selon une des revendications 2 à 5, caractérisé en ce qu'on interrompt le cycle de charge chaque fois pour une courte durée aux instants de mesure des accroissements de tension.

7. Procédé selon une des revendications précédentes, caractérisé en ce que le dernier cycle de charge est suivi d'une charge complémentaire avec un courant de charge complémentaire qui est réduit par rapport au courant de charge fourni pour le dernier cycle de charge.

8. Procédé selon la revendication 7, caractérisé en ce qu'on met fin à la charge complémentaire ou charge d'appoint après une durée déterminée.

FIG. 1

V/R Diskriminat. $|a-e| \geq m$ — 11

V/R-Zähler 1 — 9

V/R-Zähler 2 — 10

V/R-Zähler An-steuerung — 8

Ablaufsteuerung — 3

Wandler Nachführ-Logik — 4

$dU_{min}$-Schritt — 5

Komparator — 2

$U_{ist}$

$U_{ref}$

D/A Wandler — 7

Zähler — 6

1

FIG.3

FIG.2